# FASCICULE DE BREVET EUROPEEN

(11) **EP 1 556 683 B1**
(45) Date de publication et mention de la délivrance du brevet: **06.05.2015**
(21) Numéro de dépôt: 03785992.3
(22) Date de dépôt: 24.10.2003
(51) Int. Cl.: G01N 21/90

(54) **INSTALLATION POUR LA DETECTION AUTOMATIQUE DE DEFAUTS D'UN ARTICLE**
ANLAGE ZUR AUTOMATISCHEN DETEKTION VON DEFEKTEN EINES ARTIKELS
INSTALLATION FOR THE AUTOMATIC DETECTION OF DEFECTS OF AN ARTICLE

(30) Priorité: 25.10.2002 FR 0213420
(43) Date de publication de la demande: 27.07.2005
(73) Titulaire: MSC & SGCC, 69390 Vourles (FR)
(72) Inventeur: DUBOIS, Philippe, F-60128 Mortefontaine (FR)
(74) Mandataire: Putet, Gilles
(86) Numéro de dépôt international: PCT/FR2003/003167
(87) Numéro de publication internationale: WO 2004/040279

(56) Documents cités:
- EP-A- 0 952 443
- US-A- 4 650 326
- US-A- 4 758 084
- US-A- 5 072 107
- PATENT ABSTRACTS OF JAPAN vol. 015, no. 011 (P-1150), 10 janvier 1991 (1991-01-10) & JP 02 257044 A (NEC CORP;OTHERS: 01), 17 octobre 1990 (1990-10-17)
- PATENT ABSTRACTS OF JAPAN vol. 1998, no. 11, 30 septembre 1998 (1998-09-30) & JP 10 160686 A (TOYO GLASS CO LTD), 19 juin 1998 (1998-06-19)
- PATENT ABSTRACTS OF JAPAN vol. 012, no. 313 (P-749), 25 août 1988 (1988-08-25) & JP 63 081250 A (FUJI ELECTRIC CO LTD), 12 avril 1988 (1988-04-12)

## Description

La présente invention concerne une instillation comportant un dispositif d'éclairage d'une zone d'intérêt d'un article en vue de la détection automatique de défauts apparents de différents types. Elle concerne une installation pour la détection automatique de défauts comportant un tel dispositif.

L'invention concerne notamment l'application d'une telle installation à la détection automatique de défauts apparaissant sur la partie supérieure de la bague du goulot d'un récipient fabriqué industriellement.

Lorsque des articles, et notamment des bouteilles en verre, sont fabriqués industriellement, il est connu de placer en générai en fin de chaîne de production, une installation de détection automatique de défauts comprenant, d'une part, un capteur vidéo associé à des moyens logiciels d'analyse d'images et, d'autre part, un dispositif d'éclairage des articles défilant devant le capteur vidéo, pour améliorer la visibilité de défauts éventuels.

En particulier, lors de la fabrication industrielle de bouteilles en verre, certains défauts apparaissent régulièrement. Ces défauts sont essentiellement de trois types.

Les défauts de type "fil bague" sont de petits reliefs filiformes apparaissant sur la face supérieure de le bague de la bouteille, suivant une direction radiale.

Les défauts de type "excédent de moulage" sont des remontées de verre apparaissant sur la face interne de la bague de la bouteille.

Enfin, les défauts de type "affaissés" sont des manques de matière apparaissant sur la face supérieure de la bague de la bouteille.

Un éclairage judicieux de la bague de la bouteille permet d'améliorer la visibilité de ces défauts sur les images enregistrées par le capteur vidéo devant lequel défilent les bouteilles. Cependant, les défauts précités étant de types différents, un éclairage favorise la visibilité de tel ou tel type de défaut, notamment selon son angle d'incidence par rapport à la face supérieure de la bague. Le compromis n'est pas facile à trouver pour déterminer le meilleur éclairage.

Le document US-4.650.326 décrit une installation éclairant deux zones différentes d'un goulot de bouteille sous deux couleurs différentes.

L'invention vise à remédier à cet inconvénient en fournissant une installation capable d'améliorer la visibilité de chaque type de défauts susceptibles d'être détectés, de sorte que cette visibilité soit optimale pour chacun des types de défauts, sans porter préjudice à la détection des autres types de défauts.

A cet effet, invention a pour objet une installation comportant un dispositif d'éclairage d'une zone d'intérêt d'un article en vue de la détection automatique de défauts apparents de différents types, telle que définie par la revendication 1.

Ainsi, la lumière émise par un ensemble est orientée de façon optimale pour le type de défauts associé a cet ensemble, indépendamment des autres types de défauts. Aucun compromis n'est donc nécessaire.

Dans une installation selon l'invention, chaque ensemble comporte des moyens d'éclairage de la zone d'intérêt sous une couleur spécifique.

Dans un mode de réalisation préféré, le dispositif d'éclairage selon l'invention comporte trois ensembles de sources lumineuses, éclairant respectivement la zone d'intérêt sous une lumière rouge, verte et bleue.

Un avantage de ce dispositif d'éclairage est d'éclairer simultanément chacun des types de défauts sous une couleur différente, rouge, verte ou bleue, et de retrouver ces images de coupleurs différentes spécifiques à tel ou tel type de défauts, à l'aide du capteur d'images. En effet, des capteurs d'images capables de séparer les composantes rouge, verte et bleue à partir d'une image quelconque sont classiques.

Un dispositif d'éclairage selon l'invention peut en outre comporter l'une ou plusieurs des caractéristiques suivantes :
- le dispositif comprend des moyens de séparation de faisceaux de sources lumineuses appartenant à des ensembles différents ;
- le dispositif comprend un diaphragme délimitant les faisceaux de certaines au moins des sources lumineuses ;
- l'ensemble de sources lumineuses associé aux défauts de type excédent de moulage se décompose en des premier et second sous-ensembles, la lumière émise par le premier sous-ensemble étant dirigée vers le contour intérieur de la bague et la lumière émise par le second sous-ensemble étant dirigée vers le contour extérieur de la bague ;

- le dispositif comporte des moyens d'homogénéisation par diffusion de la lumière émise par certaines au moins des sources lumineuses ;
- des premiers moyens d'homogénéisation sont disposés entre l'ensemble de sources lumineuses associé aux défauts de type affaissé et la zone d'intérêt ;
- des seconds moyens d'homogénéisation sont disposés entre le second sous-ensemble de l'ensemble de sources lumineuses associé aux défauts de type excédent de moulage et la zone d'intérêt ;
- la lumière émise par l'ensemble associé aux défauts de type affaissé a une orientation définie par un angle axial compris entre 0 et 30 degrés et un angle circulaire sensiblement nul ;
- la lumière émise par l'ensemble associé aux défauts de type fil bague a une orientation définie par des première et seconde directions d'éclairage, la seconde direction d'éclairage ayant un angle axial égal à celui de la première direction et un angle circulaire opposé à celui de la première direction ;
- chaque ensemble de sources lumineuses comporte plusieurs couronnes concentriques de sources lumineuses pour prendre en compte différents diamètres de bagues ;
- dans l'ensemble associé aux défauts de type fil bague, les couronnes concentriques de sources lumineuses sont orientées alternativement selon les première et seconde directions ;
- le dispositif comprend un support muni de logements de réception de certaines au moins des sources lumineuses, l'orientation des logements déterminant celle des sources lumineuses ;
- le support comporte une platine étagée pour le support des sources lumineuses de l'ensemble associé aux défauts de type fil bague et des sources lumineuses du premier sous-ensemble de l'ensemble associé aux défauts de type excédent de moulage ;
- les sources lumineuses sont des diodes électro-luminescentes.

L'invention a également pour objet une installation de détection automatique de défauts apparents de différents types sur une zone d'intérêt d'un article, comportant un dispositif d'éclairage de la zone d'intérêt et des moyens de capture et d'analyse d'images de la zone d'intérêt éclairée, caractérisée en ce que le dispositif d'éclairage est un dispositif tel que celui décrit précédemment.

Une installation de détection automatique de défauts selon l'invention peut en outre comporter :
- des moyens de capture et d'analyse comportant des moyens de traitement des images capturées pour la détection des défauts, différents selon l'ensemble de sources d'éclairage ayant éclairé les images.

L'invention sera mieux comprise à l'aide de la description qui va suivre, donnée uniquement à titre d'exemple et faite en se référant aux dessins annexés, dans lesquels :
- les figures 1, 2 et 3 illustrent des types de défauts apparaissant sur la partie supérieure de la bague du goulot d'un récipient ;
- la figure 4 représente schématiquement en coupe longitudinale, une installation de détection automatique de défauts selon l'invention ;
- la figure 5 définit des angles radial et circulaire de caractérisation d'orientations dans une installation selon l'invention ;
- la figure 6 représente une vue partielle en coupe d'un dispositif d'éclairage selon l'invention ;
- les figures 7 et 8 représentent respectivement en perspective et en vue de face un support de sources lumineuses pour le dispositif d'éclairage de la figure 6 ; et
- la figure 9 représente un diaphragme pour le support des figures 7 et 8.

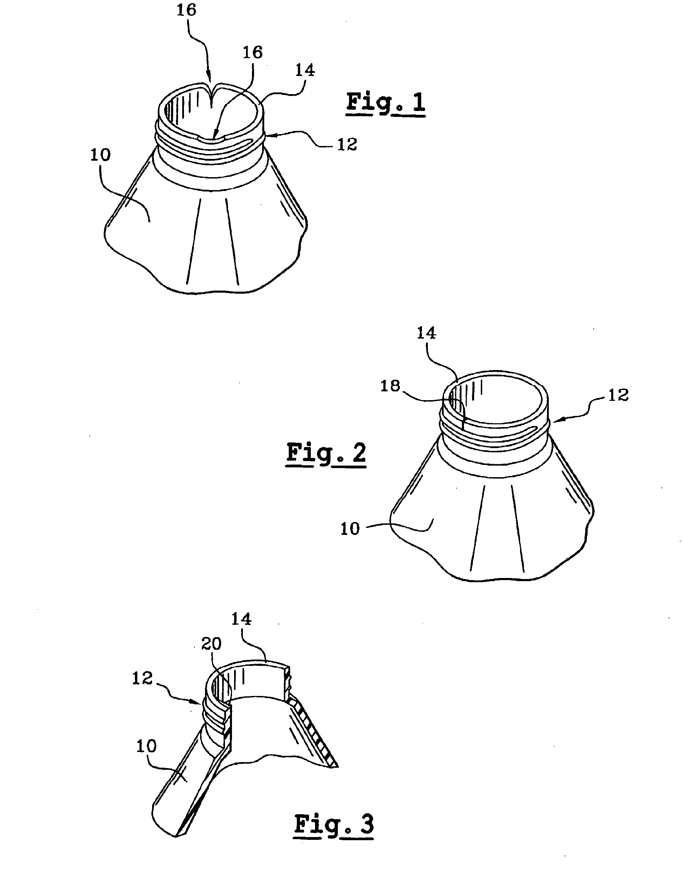

Les figures 1, 2 et 3 représentent la partie supérieure d'une bouteille en verre. Sur ces figures, un goulot 10 de la bouteille comporte dans sa partie supérieure une bague 12 dont la face latérale cylindrique comporte éventuellement un pas de vis.

La partie supérieure de cette bague 12 comporte une face essentiellement annulaire 14 appelée généralement "buvant". Lors de la fabrication industrielle d'une bouteille en verre, le buvant 14 peut comporter un ou plusieurs défauts, qu'il est nécessaire de détecter en fin de chaîne de fabrication.

La figure 1 illustre un premier type de défauts appelé « affaissé » 16. Comme indiqué précédemment, ce type de défauts est dû à un manque de matière débouchant sur la face supérieure de la bague 12. Ceci a pour effet de rendre le buvant 14 non plan, c'est-à-dire qu'il comporte certaines parties présentant un affaissement. L'affaissé 16 peut être le résultat d'ébréchés ou de bulles d'air débouchant à la surface de la bague 12.

La figure 2 illustre un deuxième type de défauts appelé « fil bague » 18. Le fil bague est un relief apparaissant sur le buvant 14. Il est en général radial et se présente soit en creux soit en saillie.

La figure 3 illustre un troisième type de défauts appelé « excédent de moulage » 20, ou, en anglais, « overpress ». L'excédent de moulage apparaît sur la face interne de la bague 12, opposée à la face latérale. Il s'agit d'une remontée de verre située en dessous ou au-dessus du plan d'affleurement du buvant 14.

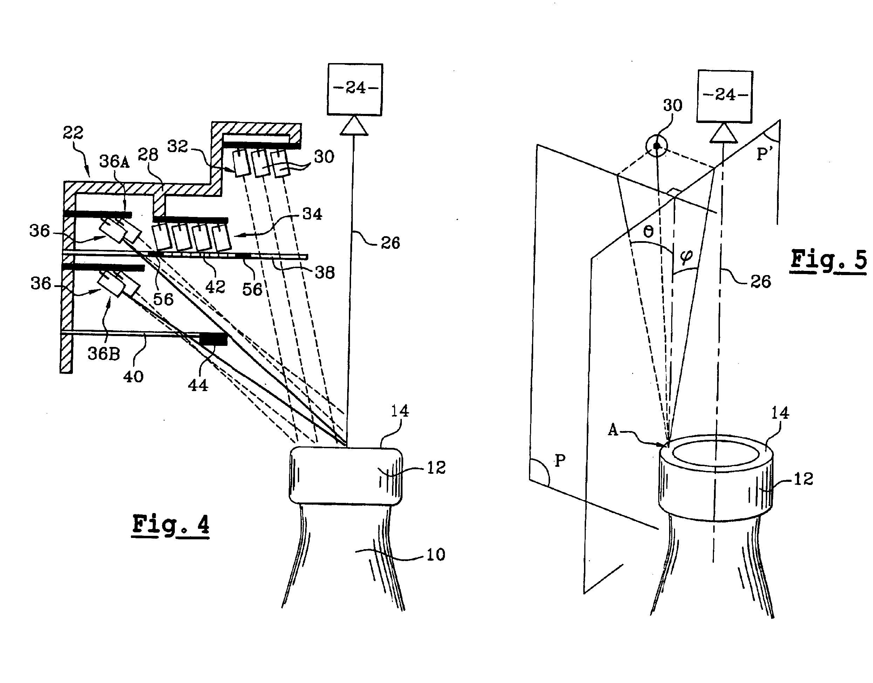

L'installation de détection de défauts représentée sur la figure 4 comprend un dispositif d'éclairage 22 et des moyens 24 de capture et d'analyse d'images, pour la détection de défauts du type précité sur le buvant 14 de la bague 12.

Les moyens 24 de capture et d'analyse d'images sont classiquement constitués d'une caméra de type CCD associée à des moyens de traitement logiciels des images numériques enregistrées par cette caméra. La caméra est disposée sur l'axe longitudinal 26 de la bouteille observée, de sorte qu'elle fait face au buvant 14 de la bouteille.

Le dispositif d'éclairage 22 est de forme générale cylindrique et centré autour de l'axe 26 de la bouteille. Il comporte une ouverture centrale permettant l'accès optique de la caméra à la bouteille.

Il comporte un support 28 sur lequel sont disposées des sources lumineuses 30. Chaque source lumineuse 30 est une diode électro-luminescente éclairant selon une direction précise avec un angle d'ouverture de faisceau lumineux prédéterminé. On choisit par exemple un angle d'ouverture de 30 degrés.

Dans l'exemple décrit, les diodes 30 sont réparties en trois ensembles 32, 34, 36 de sources lumineuses.

Les diodes 30 du premier ensemble 32 sont par exemple des diodes éclairant en lumière bleue et sont destinées à mettre en valeur les défauts de type affaissé. Elles sont disposées pour éclairer les affaissés sous une certaine orientation, comme cela sera précisé en référence à la figure 5.

Les diodes 30 du deuxième ensemble 34 sont par exemple des diodes éclairant en lumière verte et sont destinées à mettre en valeur les défauts de type fil bague. Elles sont disposées pour éclairer ce type de défauts sous une orientation spécifique différente de celle des diodes du premier ensemble 32.

On notera que le deuxième ensemble 34 est légèrement plus éloigné de l'axe 26 de la bouteille que le premier ensemble 32.

Les diodes 30 du troisième ensemble 36 sont par exemple des diodes éclairant en lumière rouge et sont destinées à mettre en valeur les défauts de type excédent de moulage. Elles sont disposées pour éclairer ce type de défauts sous une orientation spécifique différente de celle des diodes du premier ensemble 32 et du deuxième ensemble 34.

Ce troisième ensemble 36 se décompose en deux sous-ensembles 36a et 36b décalés parallèlement à l'axe 26. Dans le premier sous-ensemble 36a l'éclairage des diodes est dirigé vers le contour intérieur de la bague 12 pour éclairer les excédents de moulage situés en-dessous du buvant 14, alors que dans le second sous-ensemble 36b l'éclairage des diodes est dirigé vers le contour extérieur de la bague 12 pour éclairer les excédents de moulage situés au dessus du buvant 14. C'est pourquoi, le second sous-ensemble 36b est situé plus près du buvant en considérant la direction de l'axe 26.

On notera que le troisième ensemble 36 est plus éloigné de l'axe 26 de la bouteille que les deux premiers ensembles 32 et 34.

Les diodes des trois ensembles de sources lumineuses éclairent simultanément le buvant 14 sous trois couleurs différentes qui se combinent devant l'objectif de la caméra, chaque couleur mettant en relief un type de défauts.

L'image résultante est enregistrée par la caméra CCD qui décompose alors cette image en trois images de couleurs rouge, verte et bleue.

L'image bleue engendrée met en valeur essentiellement les défauts de type affaissé, l'image verte met en valeur les défauts de type fil bague et l'image rouge, les défauts de type excédent de moulage ("overpress").

Ensuite, soit un opérateur examine ces trois images séparément sur un écran d'affichage pour détecter les défauts éventuels, soit des moyens logiciels classiques de traitement d'images réalisent automatiquement cette opération.

Le support 22 porte en outre une première plaque translucide dépolie 38 disposée entre le premier ensemble de diodes 32 et le buvant 14. Le support 22 porte une seconde plaque translucide dépolie 40 disposée entre le second sous-ensemble 36b de diodes du troisième ensemble 36 et le buvant 14.

Ces plaques dépolies forment des moyens d'homogénéisation par diffusion de la lumière émise par les diodes 30.

Le support 22 porte également un diaphragme 42 disposé entre le deuxième ensemble de diodes 34 et le buvant 14, pour diriger précisément le faisceau lumineux de chacune de ces diodes vers une zone prédéterminée du plan d'affleurement du buvant 14.

Enfin, il porte des moyens 44 de séparation de faisceaux, constitués d'un anneau en matière opaque à la lumière, disposé entre les faisceaux émis par les diodes des premier et deuxième sous-ensembles 36a et 36b du troisième ensemble 36, de façon que les bords internes et externes de l'anneau délimitent les faisceaux émis respectivement par les diodes des premier et second sous-ensembles 36a, 36b.

Les diodes 34 de chaque ensemble sont disposées pour éclairer le buvant 14 selon une orientation spécifique au type de défaut considéré.

Comme cela est représenté sur la figure 5, on caractérise l'orientation de l'éclairage d'une diode 30 quelconque du dispositif 22 à l'aide de deux angles exprimant les coordonnées cylindriques de la diode 30 dans un repère centré en un point A du buvant 14 devant être éclairé par cette diode. Pour cela on définit le plan P comprenant l'axe 26 de la bouteille et le point A, et le plan P' passant par A, perpendiculaire au plan P et parallèle à l'axe 26 de la bouteille.

La direction d'éclairage de la diode 30 vers le point A est complètement déterminée d'une part par un angle axial θ mesuré entre la projection orthogonale de cette direction d'éclairage sur le plan P et l'axe 26, et d'autre par un angle circulaire ϕ mesuré entre la projection orthogonale de cette direction d'éclairage sur le plan P' et l'axe 26.

De préférence, les ensembles de sources lumineuses sont disposés sur le dispositif d'éclairage 22 de sorte que le premier ensemble de sources lumineuses 32 dédié à la mise en valeur des défauts de type affaissé éclaire le buvant 14 sous un angle axial θ compris entre 0 et 30 degrés et un angle circulaire ϕ nul.

De préférence également, le deuxième ensemble de sources lumineuses 34 dédié à la mise en valeur des défauts de type fil bague éclaire le buvant 14 selon une première direction définie par un angle axial θ compris entre 0 et 30 degrés et un angle circulaire ϕ compris entre 25 et 45 degrés, et une seconde direction définie par un angle axial θ égal à celui de la première direction et un angle circulaire ϕ opposé à celui de la première direction.

Enfin, de préférence, le troisième ensemble de sources lumineuses 36 dédié à la mise en valeur des défauts de type excédent de moulage éclaire le buvant 14 sous un angle axial θ compris entre 30 et 60 degrés et un angle circulaire ϕ nul.

On notera que chaque ensemble de sources lumineuses comporte généralement plusieurs couronnes concentriques de diodes pour prendre en compte différents diamètres de buvants.

Ainsi, le premier ensemble 32 comporte trois couronnes de diodes, le deuxième ensemble 34 comporte quatre couronnes de diodes et chaque sous-ensemble 36a, 36b du troisième ensemble 36 comporte deux couronnes de diodes.

Dans le deuxième ensemble 34 les couronnes de diodes sont orientées alternativement selon les première et seconde directions d'éclairage définies précédemment. Ceci permet d'améliorer la mise en valeur des défauts de type fil bague, de forme générale radiale, en les éclairant avec des faisceaux d'angles circulaires opposés. En effet, l'angle circulaire ϕ du faisceau provoque un éclairage tangentiel du buvant 14, particulièrement adapté à ce type de défauts.

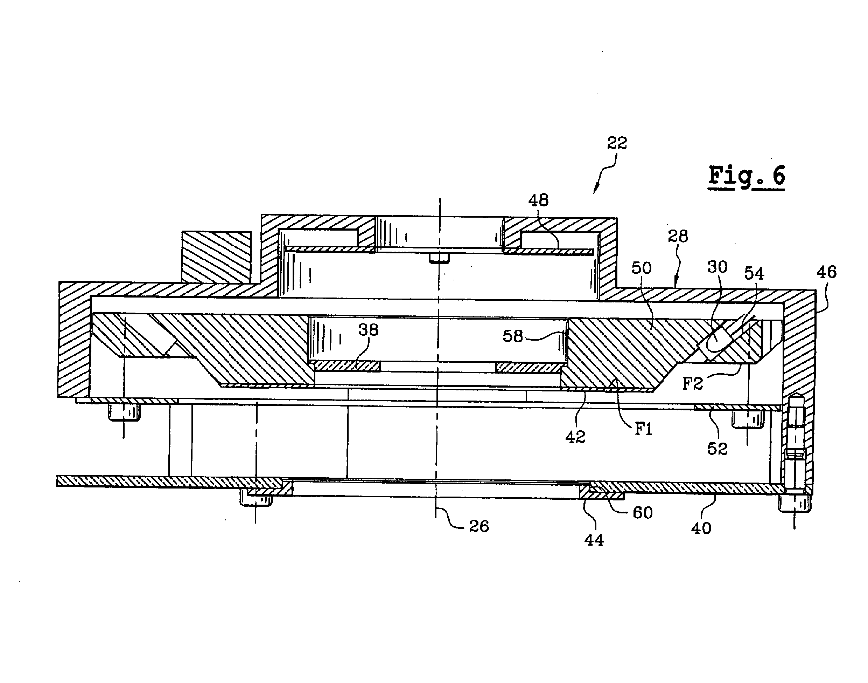

Les figures 6 à 9 illustrent un exemple de réalisation du dispositif d'éclairage 22.

Sur ces figures on voit que le support 28 comporte un corps 46 de forme générale cylindrique. Ce corps 46 porte une première plaque annulaire 48, une platine 50 étagée axialement, et une seconde plaque annulaire 52.

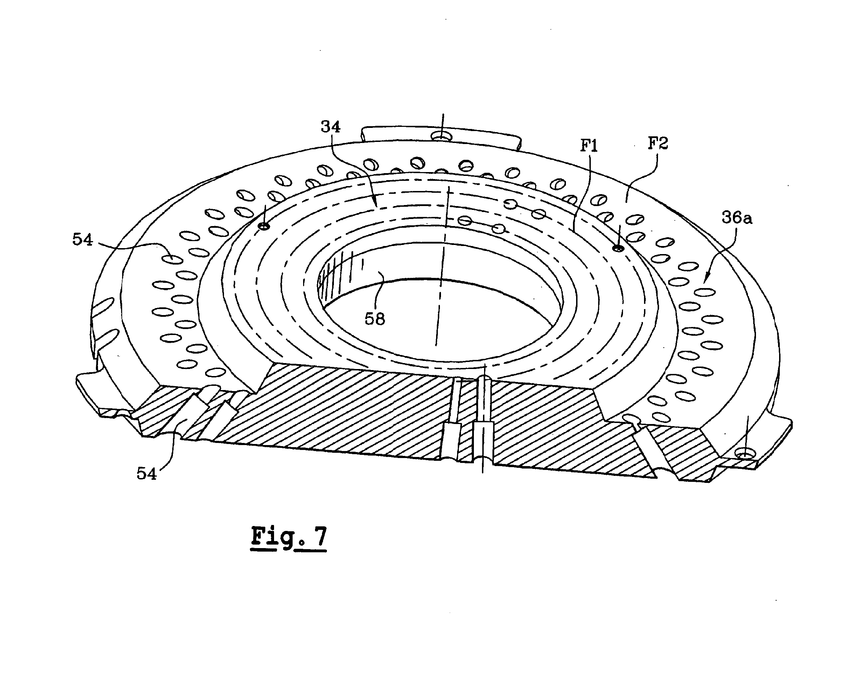

Le premier ensemble 32 de sources lumineuses est porté par la première plaque 48. La platine 50, représentée en perspective sur la figure 7, porte le deuxième ensemble 34 de sources lumineuses et le premier sous-ensemble 36a du troisième ensemble 36 de sources lumineuses. Enfin la seconde plaque 52 porte le second sous-ensemble 36b du troisième ensemble 36 de sources lumineuses.

On notera que le deuxième ensemble 34 de sources lumineuses et le premier sous-ensemble 36a du troisième ensemble 36 de sources lumineuses sont agencés respectivement sur des faces F1 et F2 de la platine 50, décalées axialement. La face F1, entourée par la face F2, est plus proche du plan d'affleurement du buvant 14. Pour des raisons de clarté on n'a représenté qu'une diode 30 sur la figure 6.

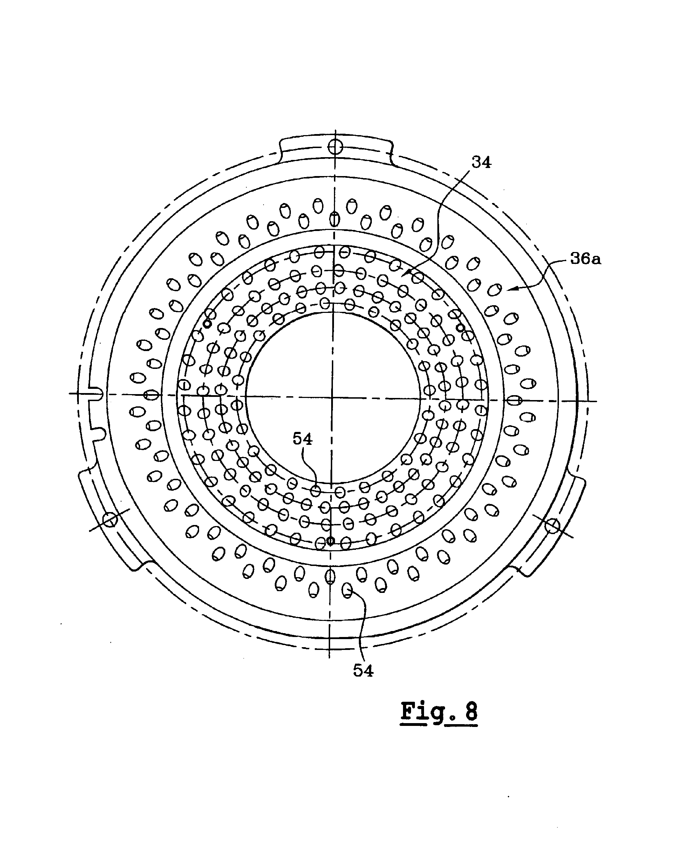

Les diodes portées par la platine 50 sont logées dans des trous 54 débouchant dans la face F1 ou F2. La totalité des trous n'est représentée que sur la figure 8. Ces trous ont une orientation qui détermine précisément l'orientation (θ, ϕ) des diodes 30 qu'ils contiennent.

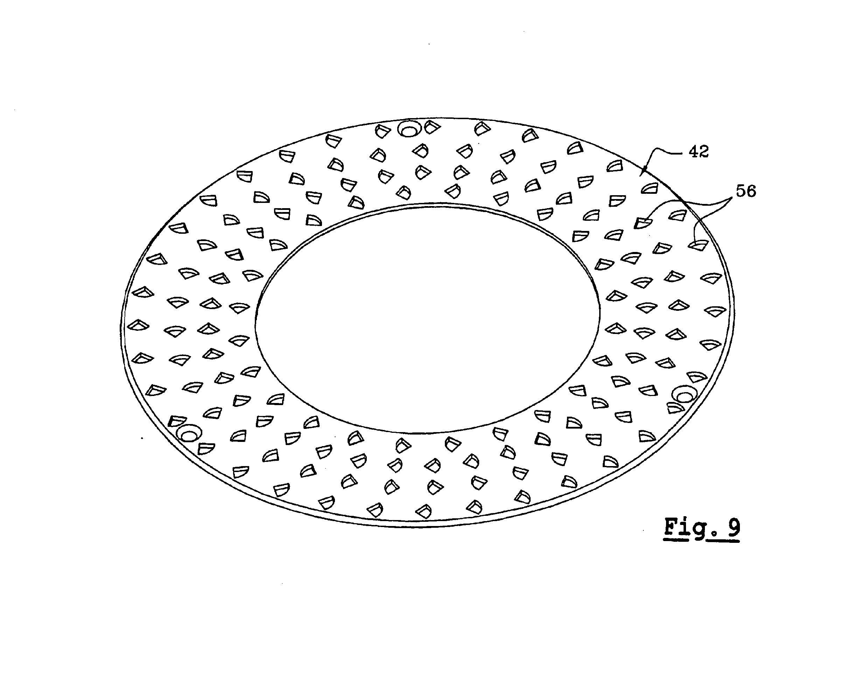

La face F1 porte le diaphragme 42. Celui-ci, représenté en perspective sur la figure 9, comporte autant de trous 56 de délimitation de faisceaux que de diodes 30 dans le deuxième ensemble 34. Chaque trou 56 a une forme générale de secteur déterminant des portions d'éclairage du plan d'affleurement du buvant 14.

La première plaque translucide dépolie 38 est logée dans un orifice central 58 de la platine 50.

La seconde plaque translucide dépolie 40 est fixée de façon connue en soi au corps 46. Elle sert de support pour les moyens 44 de séparation de faisceaux. Ces derniers sont logés dans un orifice central 60 de la seconde plaque translucide dépolie 40.

Il apparaît clairement qu'un dispositif d'éclairage et qu'une installation de détection de défauts tels que décrits précédemment permettent une meilleure détection de différents types de défauts sur une même zone d'intérêt.

On notera que le type d'un défaut est caractérisé par la morphologie de ce défaut et non par la position de ce défaut sur un article tel qu'une bouteille en verre. Plus particulièrement, le type d'un défaut de la bague du goulot d'une bouteille se définit de façon indépendante de la position de ce défaut sur cette bague. L'invention permet donc de discriminer les types de défauts indépendamment de leur position.

L'utilisation de sources lumineuses de couleurs différentes et séparables par une caméra pour éclairer cette zone d'intérêt permet en outre d'envisager un traitement automatique optimal des images résultantes.

## Revendications

1. Installation de détection automatique de défauts apparents de différents types (16, 18, 20) sur une zone d'intérêt (14) d'un article, comportant un dispositif d'éclairage (22) de la zone d'intérêt et des moyens (24) de capture et d'analyse d'images de la zone d'intérêt éclairé, le dispositif d'éclairage comportant plusieurs ensembles (32, 34, 36) de sources lumineuses (30), chaque ensemble comportant des moyens d'éclairage (30) de la zone d'intérêt (14) sous une couleur spécifique, et les moyens (24) de capture et d'analyse d'images comportant des moyens de génération d'images de coupleurs différentes issues d'une seule capture, ces couleurs différentes correspondant chacune à la couleur d'éclairage de l'un des ensembles (32, 34, 36) de sources lumineuses, **caractérisée en ce que** la zone d'intérêt est le buvant (14) d'une bouteille en verre, **en ce que** le dispositif d'éclairage est de forme générale cylindrique et centré autour de l'axe du récipient, **en ce que** la lumière émise par chaque ensemble est orientée de façon différente et spécifique à un type de défauts associé uniquement à cet ensemble, le type d'un défaut étant **caractérisé par** la morphologie de ce défaut, les défauts apparents comprenant des défauts de type affaissé (16), des défauts de type fil bague (18) et des défauts de type excédent de moulage (20), en ce que l'ensemble de sources lumineuses (34) dédié à la mise en valeur des défauts de type fil bague éclaire le buvant (14) selon une première direction définie par un angle axial (θ) compris entre 0 et 30 degrés et un angle circulaire (ϕ) compris entre 25 et 45 degrés, et une seconde direction définie par un angle axial (θ) égal à celui de la première direction et un ange circulaire (ϕ) opposé à celui de la première direction, et en ce que la lumière émise par l'ensemble (36) associé aux défauts de type excédent de moulage (20) a une orientation définie par un angle axial (θ) compris entre 30 et 60 degrés et un ange circulaire (ϕ) nul.

2. Installation de détection automatique de défauts (16, 18, 20) selon la revendication 1, **caractérisée en ce que** les moyens (24) de capture et d'analyse d'images comportent des moyens de traitement des images capturées pour la détection des défauts, différents selon l'ensemble (32, 34, 36) de sources lumineuses ayant éclairé les images.

3. Installation selon la revendication 1 ou 2, **caractérisée en ce qu'**elle comporte trois ensembles de sources lumineuses, éclairant respectivement le buvant (14) sous une lumière rouge, verte et bleue.

4. Installation selon l'une quelconque des revendications 1 à 3, **caractérisée en ce qu'**elle comprend des moyens (44) de séparation de faisceaux de sources lumineuses appartenant à des ensembles différents.

5. Installation selon l'une quelconque des revendications 1 à 4, **caractérisée en ce qu'**elle comprend un diaphragme (42) délimitant les faisceaux de certaines au moins des sources lumineuses (30).

6. Installation selon la revendication 5, **caractérisée en ce que** le diaphragme (42) est disposé entre l'ensemble (34) de sources lumineuses associé au défaut de type fil bague (18) et le buvant (14).

7. Installation selon l'une quelconque des revendications 1 à 6, **caractérisée en ce que** l'ensemble (36) de sources lumineuses associé aux défauts de type excédent de moulage (20) se décompose en des premier et second sous-ensembles (36a, 36b), la lumière émise par le premier sous-ensemble (36a) étant dirigée vers le contour intérieur de la bague (12) et la lumière émise par le second sous-ensemble (36b) étant dirigée vers le contour extérieur de la blague.

8. Installation selon l'une quelconque des revendications 1 à 7, **caractérisée en ce qu'**elle comporte des moyens (38, 40) d'homogénéisation par diffusion de la lumière émise par certaines au moins des sources lumineuses (30).

9. Installation selon la revendication 8, **caractérisée en ce que** des premiers moyens d'homogénéisation (38) sont disposés entre l'ensemble (32) de sources lumineuses associé aux défauts de type affaissé (16) et le buvant (14).

10. Installation selon la revendication 8 ou 9, **caractérisée en ce que** des seconds moyens d'homogénéisation (40) sont disposés entre le second sous-ensemble (36a) de l'ensemble (36) de sources lumineuses associé aux défauts de type excédent de moulage (20) et le buvant (14).

11. Instillation sein l'une quelconque des revendications 1 à 10, **caractérisée en ce que** la lumière émise par l'ensemble (32) associé aux défauts de type affaissé (16) a une orientation définie par un angle axial (8) compris entre 0 et 30 degrés et un angle circulaire (ϕ) sensiblement nul.

12. Installation selon l'une quelconque des revendications 1 à 11, **caractérisée en ce que** chaque ensemble (32, 34, 36) de sources lumineuses comporte plusieurs couronnes concentriques de sources lumineuses (30) pour prendre en compte différents diamètres de bagues (12).

13. Instillation selon les revendications 1 et 12 prises ensemble, **caractérisée en ce que** dans l'ensemble (34) associé aux défauts de type fil bague (18), les couronnes concentriques de sources lumineuses (30) sont orientées alternativement selon les première et seconde directions.

14. Installation selon l'une quelconque des revendications 1 à 13, **caractérisée en ce qu'**il comprend un support (28) muni de logements (54) de réception de certaines au moins des sources lumineuses (30), l'orientation des logements déterminant celle des sources lumineuses.

15. Installation selon la revendication 14, **caractérisée en ce que** le support (28) comporte une platine étagée (50) pour le support des sources lumineuses de l'ensemble (34) associé aux défauts de type fil bague (18) et des sources lumineuses du premier sous-ensemble (36a) de l'ensemble (36) associé aux défauts de type excédent de moulage (20).

16. Installation selon l'une quelconque des revendication 1 à 15, **caractérisée en ce que** les sources lumineuses (30) sont des diodes electro-luminescentes.

## Patentansprüche

1. Anlage zur automatischen Erkennung von sichtbaren Fehlern unterschiedlicher Typen (16, 18, 20) an einem Bereich von Interesse (14) eines Artikels, umfassend eine Vorrichtung zur Beleuchtung (22) des Bereichs von Interesse sowie Mittel (24) zur Erfassung und Analyse von Bildern des beleuchteten Bereichs von Interesse, wobei die Beleuchtungsvorrichtung mehrere Anordnungen (32, 34, 36) von Lichtquellen (30) umfasst, wobei jede Anordnung Mittel zur Beleuchtung (30) des Bereichs von Interesse (14) unter einer spezifischen Farbe umfasst, und wobei die Mittel (24) zur Erfassung und Analyse von Bildern Mittel zur Erzeugung von Bildern unterschiedlicher Farben, die aus einer einzigen Erfassung hervorgegangen sind, umfassen, wobei diese unterschiedlichen Farben jeweils der Beleuchtungsfarbe von einer der Anordnungen (32, 34, 36) von Lichtquellen entsprechen, **dadurch gekennzeichnet, dass** der Bereich von Interesse der Mündungsrand (14) einer Glasflasche ist, dass die Beleuchtungsvorrichtung allgemein zylinderförmig und um die Achse des Behälters zentriert ist, dass das durch jede Anordnung ausgesandte Licht in unterschiedlicher und für einen lediglich dieser Anordnung zugeordneten Fehlertyp spezifischen Weise ausgerichtet ist, wobei der Typ eines Fehlers durch die Morphologie dieses Fehlers gekennzeichnet ist, wobei die sichtbaren Fehler Fehler vom Typ Einsenkung (16), Fehler vom Typ Ringfaden (18) und Fehler vom Typ Formungsüberschuss (20) umfassen, dass die Lichtquellenanordnung (34), die für die Hervorhebung der Fehler vom Typ Ringfaden vorgesehen ist, den Mündungsrand (14) in einer ersten Richtung, die durch einen axialen Winkel (θ) zwischen 0 und 30 Grad und einen Kreiswinkel (ϕ) zwischen 25 und 45 Grad definiert ist, sowie einer zweiten Richtung, die durch einen axialen Winkel (θ) gleich dem der ersten Richtung und einen Kreiswinkel (ϕ) entgegengesetzt zu dem der ersten Richtung definiert ist, beleuchtet, und dass das Licht, das durch die den Fehlern vom Typ Formungsüberschuss (20) zugeordnete Anordnung (36) ausgesandt wird, eine Ausrichtung hat, die durch einen axialen Winkel (θ) zwischen 30 und 60 Grad und einen Kreiswinkel (ϕ) null definiert ist.

2. Anlage zur automatischen Erkennung von Fehlern (16, 18, 20) nach Anspruch 1, **dadurch gekennzeichnet, dass** die Mittel (24) zur Erfassung und Analyse von Bildern Mittel zur Verarbeitung der für die Erkennung der Fehler erfassten Bilder umfassen, die gemäß der Anordnung (32, 34, 36) von Lichtquellen, welche die Bilder beleuchtet hat, unterschiedlich sind.

3. Anlage nach Anspruch 1 oder 2, **dadurch gekennzeichnet, dass** sie drei Anordnungen von Lichtquellen umfasst, die den Mündungsrand (14) unter einem roten, grünen bzw. blauen Licht beleuchten.

4. Anlage nach einem der Ansprüche 1 bis 3, **dadurch gekennzeichnet, dass** sie Mittel (44) zur Trennung von Strahlen von Lichtquellen, die zu unterschiedlichen Anordnungen gehören, umfasst.

5. Anlage nach einem der Ansprüche 1 bis 4, **dadurch gekennzeichnet, dass** sie eine Blende (42) umfasst, die die Strahlen von wenigstens einigen der Lichtquellen (30) begrenzt.

6. Anlage nach Anspruch 5, **dadurch gekennzeichnet, dass** die Blende (42) zwischen der Anordnung (34) von Lichtquellen, die dem Fehler vom Typ Ringfaden (18) zugeordnet ist, und dem Mündungsrand (14) angeordnet ist.

7. Anlage nach einem der Ansprüche 1 bis 6, **dadurch gekennzeichnet, dass** die Anordnung (36) von Lichtquellen, die den Fehlern vom Typ Formungsüberschuss (20) zugeordnet ist, aus einer ersten und einer zweiten Untereinheit (36a, 36b) besteht, wobei das durch die erste Untereinheit (36a) ausgesandte Licht in Richtung der Innenkontur des Rings (12) gerichtet ist und das durch die zweite Untereinheit (36b) ausgesandte Licht in Richtung der Außenkontur des Rings gerichtet ist.

8. Anlage nach einem der Ansprüche 1 bis 7, **dadurch gekennzeichnet, dass** sie Mittel (38, 40) zur Homogenisierung durch Streuen des durch wenigstens einige der Lichtquellen (30) ausgesandten Lichts umfasst.

9. Anlage nach Anspruch 8, **dadurch gekennzeichnet, dass** erste Homogenisierungsmittel (38) zwischen der Anordnung (32) von Lichtquellen, welche den Fehlern vom Typ Einsenkung (16) zugeordnet ist, und dem Mündungsrand (14) angeordnet sind.

10. Anlage nach Anspruch 8 oder 9, **dadurch gekennzeichnet, dass** zweite Homogenisierungsmittel (40) zwischen der zweiten Untereinheit (36b) der Anordnung (36) von Lichtquellen, welche den Fehlern vom Typ Formungsüberschuss (20) zugeordnet ist, und dem Mündungsrand (14) angeordnet sind.

11. Anlage nach einem der Ansprüche 1 bis 10, **dadurch gekennzeichnet, dass** das Licht, das durch die den Fehlern vom Typ Einsenkung (16) zugeordnete Anordnung (32) ausgesandt wird, eine Ausrichtung hat, die durch einen axialen Winkel (θ) zwischen 0 und 30 Grad und einen Kreiswinkel (ϕ) im Wesentlichen null definiert ist.

12. Anlage nach einem der Ansprüche 1 bis 11, **dadurch gekennzeichnet, dass** jede Anordnung (32, 34, 36) von Lichtquellen mehrere konzentrische Kränze von Lichtquellen (30) umfasst, um unterschiedlichen Durchmessern von Ringen (12) Rechnung zu tragen.

13. Anlage nach den Ansprüchen 1 und 12 zusammen genommen, **dadurch gekennzeichnet, dass** bei der den Fehlern vom Typ Ringfaden (18) zugeordneten Anordnung (34) die konzentrischen Kränze von Lichtquellen (30) abwechselnd in der ersten und der zweiten Richtung ausgerichtet sind.

14. Anlage nach einem der Ansprüche 1 bis 13, **dadurch gekennzeichnet, dass** sie einen Halter (28) umfasst, der mit Aufnahmen (54) zur Aufnahme wenigstens einiger der Lichtquellen (30) ausgestattet ist, wobei die Ausrichtung der Aufnahmen diejenige der Lichtquellen bestimmt.

15. Anlage nach Anspruch 14, **dadurch gekennzeichnet, dass** der Halter (28) eine gestufte Platte (50) für den Halter der Lichtquellen der den Fehlern vom Typ Ringfaden (18) zugeordneten Anordnung (34) und der Lichtquellen der ersten Untereinheit (36a) der den Fehlern vom Typ Formungsüberschuss (20) zugeordneten Anordnung (36) umfasst.

16. Anlage nach einem der Ansprüche 1 bis 15, **dadurch gekennzeichnet, dass** die Lichtquellen (30) Leuchtdioden sind.

## Claims

1. An installation for automatically detecting visible defects of various types (16, 18, 20) in a zone of interest (14) of an article, the installation comprising a lighting device (22) for lighting the zone of interest and image capture and analysis means (24) for capturing and analyzing images of the lighted zone of interest, the lighting device having a plurality of sets (32, 34, 36) of light sources (30), each set comprising means (30) for lighting the zone of interest (14) with a specific color, and the image capture and analysis means (24) including means for generating images of different colors taken from a single capture, each of the different colors corresponding to the lighting color of one of the sets (32, 34, 36) of light sources, the installation being **characterized in that** the zone of interest is the rim (14) of a glass bottle, **in that** the lighting device is generally cylindrical in shape and centered around the axis of the container, **in that** the light emitted by each set is oriented in a manner that is different and specific to a type of defect associated solely with that set, the type of a defect being **characterized by** the morphology of the defect, the visible defect comprising defects of the unfilled type (16), defects of the lineover type (18), and defects of the overpress type (20), in that the set of light sources (34) dedicated to revealing defects of the lineover type light the rim (14) in a first direction defined by an axial angle (θ) lying in the range 0° to 30° and a circular angle (ϕ) lying in the range 25° to 45°, and a second direction defined by an axial angle (θ) equal to the axial angle of the first direction and a circular angle (ϕ) opposite to the circular angle of the first direction, and in that the light emitted by the set (36) associated with defects of the overpress type (20) has an orientation defined by an axial angle (θ) lying in the range 30° to 60° and a circular angle (ϕ) of zero.

2. An installation according to claim 1 for automatically detecting defects (16, 18, 20), the installation being **characterized in that** the image capture and analysis means (24) comprise means for processing captured images in order to detect defects, which means differ depending on the light source set (32, 34, 36) used for lighting the images.

3. An installation according to claim 1 or claim 2, **characterized in that** it includes three sets of light sources respectively lighting the rim (14) in red light, green light, and blue light.

4. An installation according to any one of claims 1 to 3, **characterized in that** it includes means (44) for separating beams from light sources belonging to different sets.

5. An installation according to any one of claims 1 to 4, **characterized in that** it includes a diaphragm (42) defining the beams of at least some of the light sources (30).

6. An installation according to claim 5, **characterized in that** the diaphragm (42) is arranged between the set (34) of light sources associated with the defect of lineover type (18) and the rim (14).

7. An installation according to any one of claims 1 to 6, **characterized in that** the set (36) of light sources associated with defects of overpress type (20) comprise first and second subsets (36a, 36b), the light emitted by the first subset (36a) being directed to the inner outline of the finish (12) and the light emitted by the second subset (36b) being directed to the outer outline of the finish.

8. An installation according to any one of claims 1 to 7, **characterized in that** it includes homogenization means (38, 40) for homogenizing by diffusion the light emitted by at least some of the light sources (30).

9. An installation according to claim 8, **characterized in that** first homogenization means (38) are arranged between the set (32) of light sources associated with defects of the unfilled type (16) and the rim (14).

10. An installation according to claim 8 or claim 9, **characterized in that** second homogenization means (40) are arranged between the second subset (36a) of the set (36) of light sources associated with defects of the overpress type (20) and the rim (14).

11. An installation according to any one of claims 1 to 10, **characterized in that** the light emitted by the set (32) associated with defects of the unfilled type (16) has an orientation defined by an axial angle (θ) lying in the range 0° to 30° and a circular angle (ϕ) that is substantially zero.

12. An installation according to any one of claims 1 to 11, **characterized in that** each set (32, 34, 36) of light sources comprises a plurality of concentric rings of light sources (30) in order to accommodate finishes (12) of different diameters.

13. An installation according to claims 1 and 12 taken together, **characterized in that** in the set (34) associated with defects of the lineover type (18), the concentric rings of light sources (30) are oriented in alternation in the first direction and in the second direction.

14. An installation according to any one of claims 1 to 13, **characterized in that** it includes a support (28) having housings (54) for receiving at least some of the light sources (30), the orientations of the housings determining that of light sources.

15. An installation according to claim 14, **characterized in that** the support (28) includes a staged plate (50) for supporting the light sources of the set (34) associated with defects of the lineover type (18) and light sources of the first subset (36a) of the set (36) associated with defects of the overpress type (20).

16. An installation according to any one of claims 1 to 15, **characterized in that** the light sources (30) are light-emitting diodes.
